# EUROPEAN PATENT SPECIFICATION

(11) **EP 1 551 525 B1**
(45) Date of publication and mention of the grant of the patent: **01.08.2012**
(21) Application number: 03795030.0
(22) Date of filing: 04.09.2003
(51) Int. Cl.: B01D 29/05, B01D 33/23, B01D 63/08

(54) **FILTER PLATE**
FILTERPLATTE
PLAQUE FILTRANTE

(30) Priority: 12.09.2002 FI 20021631
(43) Date of publication of application: 13.07.2005
(73) Proprietor: LAROX OY, SF-53900 Lappeenranta (FI)
(72) Inventor: HÖGNABBA, Olli, FIN-02460 Kantvik (FI); EKBERG, Bjarne, FIN-20360 Turku (FI); VARJONEN, Veikko, FIN-20740 Turku (FI); EVELAND, Dave, B., Bloomfield, NY 14469 (US); YOST, Jeffrey, J., Newark, NY 14469 (US)
(74) Representative: Vastavuo, Juhani Veli
(86) International application number: PCT/FI2003/000645
(87) International publication number: WO 2004/024291

(56) References cited:
- EP-A1- 0 723 799
- US-A- 4 863 656
- US-A- 4 981 589
- US-A- 5 730 869
- US-A1- 2002 092 807

## Description

This Invention relates to a microporous filter plate to be used in a suction drier, particularly In a capillary filter. The filter plate is especially an Improvement In pressure shock resistance.

The US patent 5,730,869 discloses a porous ceramic filter plate comprising two discs. The porous ceramic filter Is obtainable from a thin and flat filter material. In this US patent 5,730,889 round components are punched out of the material and stacked, leaving at least one hollow interior that communicates with an outlet, and the stack is then sintered together Into a homogeneous unit. The separate components are punched out of it in the form of two flat discs and a ring with the same outside diameter, Joined subject to pressure and leaving the interior, and sintered into a homogeneous unit.

The US patent 4,981,589 relates to a filter construction in particular for suction driers. The filter construction comprises a first filter material layer of a ceramic material, which Is the first layer In relation to the flowing liquid, and a second filter material layer of a ceramic material, connected with said first layer. The first filter material layer acts as the filtering layer proper, and the second filter material layer acts as a layer that supports the construction.

The US Patent 4,863, 656 relates to a method for manufacturing a microporous plate, a filter plate obtained from the method, and a suction drier apparatus utilizing such filter plates are disclosed. The filter plate of this US patent 4863666 comprises a pair of opposed suction walls defining an Interior space between them, which is filled with a granular material. The suction drier apparatus includes at least one of the filter plates which Is mounted to be moved Into and out of a basin or the like in which material to be dewatered Is present. In one embodiment, the suction drier apparatus includes several filter plates mounted In a circular array around a rotating shift. A negative pressure is applied to the suction walls of each plate whereby water or other liquid is suctloned from the material to be dewatered through the suction walls into the interior space within the filter plate and then drawn under the negative pressure out of the plate structure.

The US patent 5, 178, 777 relates to a method for removing a filter cake from a capillary surface, when the liquid In the creation of the filter cake Is sucked through the filter surface of the filter element. In this US patent 5,178, 777 on the filter surface of the filter element there is formed a liquid film by means of reversed pressure effected through the filter element In order to make a backwash effect to the filter plate. Essentially immediately after the creation of the liquid film, at least one gas blowing is directed to the filter surface of the filter element in order to detach the filter cake located on the filter surface.

The microporous filter plate used in capillary filters are thus designed to withstand continuous pressure changes from about 0,1 bar absolute during the cake building and drying sequence to about 2,0 bar absolute during the backwash sequence. The plates have to be able to withstand this pressure change once every revolution, which means about half a million pressure chocks per year. Therefore, It is obvious that the strength of the microporous filter plate has to be extremely high In order for the plate to survive for years in rather harsh environments.

A backwash pressure of 2.0 bar absolute does not seem like a too high of a pressure for porous filter plate to withstand. Nevertheless, it has been found out that the plates are subjected to much higher pressures than what the backwash pressure is set on. This Is due to the collapsing of expanded gas when changing from vacuum mode to the backwash mode. Rushing water causes a water-hammer effect inside the plate, which can cause a short pressure peak of up to 10 bar or sometimes even higher. In addition to the strength requirements, an optimized liquid flow requires an internal substrate structure of minimal pressure drop. This is important during the cake forming stage but especially important during the backwash sequence. Insufficient backwashing causes the filter plates to clog too fast, which decreases the capacity of the filter. Furthermore, when the filter plates are clogged, the flow resistance increases and the risk for damaging pressure shocks increases.

The filter plate used in capillary filters advantageously contains a membrane with a mean pore size of about 1 micrometer and a substrate with a mean pore size of 10 micrometer, filtrate/backwash channels, filtrate/backwash outlet/inlet and mounting holes/hubs for mounting the filter plate to a filtration equipment.

The structure has enough strength and good flow properties, in terms of both filtrate removal and backwashing capacity. However, if the conditions are such that high-pressure peaks are experienced, a structure with higher strength combined with optimal flow properties is required. An un-optimized flow design creates an uneven pressure distribution inside the filter plates. The structure which is designed and optimized for a backwash pressure of maximum 2 bar absolute does not work in conditions where pressure peaks occur, but the pressure causes stresses in the plates, high enough for them to burst.

The object of the present invention is to eliminate some drawbacks of the prior art and to achieve an improved filter plate to be used in a suction drier, particularly In a capillary filter, the filter plate of which has to withstand continuous pressure shocks, and still maintains good flow properties. The essential features of the invention are enlisted In the appended claims.

The filter plate of the invention to be used in a suction drier, particularly in a capillary fllter, contains a membrane with a mean pore size of about 1 micrometer and a substrate, whereon the membrane is positioned. In the interior of the filter plate there is a recessed area with cavities for a filtrate and for a backwash liquid. The filter plate Is also provided with at least one outlet or Inlet for the filtrate and for the backwash liquid as well as with mounting holes or hubs for attaching the filter plate to the suction drier itself. The recessed area inside the filter plate according to the Invention Is provided with supporting elements, which may be part of the substrate or separate elements. The positions of supporting elements allow liquid separated from the filtered solid material or liquid used in the backwash to flow essentially simultaneously and easily in all directions, for instance both horizontally and vertically, but on the other hand the positions of supporting elements are so determined that the structure of the filter plate Is durable for stresses caused by pressure peaks.

Further, the substrate material is coarser and more porous compared to the prior art and thus the liquid separated from the filtered solid material is easier to flow inside the substrate material. Because the flow resistance Is thus minimized, the pressure peaks are decreased and the filter plate of the invention Is more durable.

When thinking the positions of supporting elements In the recess space of the filter plate the ideal situation for the liquid flow is a completely open interior and the ideal situation for strength Is a completely closed interior. On one hand, an open space is needed for fluid and on other hand, supporting elements are needed between the walls of the recess space for stress resistance, the shape and the amount of supporting elements are optimized using the design with enough total area of supporting elements and using a small enough distance between supporting elements.

The supporting elements of the invention contain 10 to 50 %, advantageously 15 to 30 %, of the total area of the recessed area at a substrate tensile strength of 10-40 MPa and at a substrate thickness of 10 to 15 millimeter (each side of the recessed area). Further, the supporting elements are so positioned, that the distance between the supporting elements withstands high Internal pressure and is maximum 75 millimeter from an edge of a supporting element to an edge of another supporting element at the same tensile strength of 10-40 MPa and at the same material thickness of 10 to 15 millimeter. It is obvious that when the material properties for the membrane will be changed also the amount of the supporting elements and the distance from one supporting element to another supporting element will be changed accordingly.

The position and shape of the supporting elements are thus such that straight stress lines are advantageously avoided inside the filter plate of the invention.

This Is achieved by the placement of the supporting elements or by variable sized and shaped supporting elements. The supporting elements can be of any shape, preferable round or oval, however in any case such that the ratio between the longest dimension and the shortest dimension is in maximum 1.5 in the cross-section parallel to the filtration surface of the filter plate. The edge around the recessed area between the supporting elements has a curvature shape that disrupts any stress lines. One preferred shape for the supporting element is a circular button.

In order to further prevent the pressure peaks in the filter plate of the invention the substrate material of the filter plate Is made coarser and/or more porous than In the prior art to allow the liquid to flow easier inside the substrate in that direction of discharging from the Interior of the substrate Into the recessed area and further In the recessed area Itself. The substrate contains particles so that the mean pore size in the substrate Is between 5 and 90 micrometer, preferably between 10 and 60 micrometer, The porosity range is 25-80 %, preferably 40 - 50 %, of the total volume of the substrate.

The membrane and the substrate of the filter plate of the invention are advantageously made of the same material; only the particle size is different.

The membrane and the substrate can also be made of different materials. The filter plate of the invention is preferable made of at least one of ceramic materials such as alumina, silicon carbide, silica, titania, zirconium oxide and chromium oxide, which are sintered or glass bonded. Other materials, such as graphite, amorphous carbon, sintered metals, plastics and cellulose can also be applied. Further, the filter plate of the invention can also be applied in conventional vacuum disc filters.

The Invention is in more details described in the following referring to the enclosed drawings where
Fig. 1 illustrates one preferred embodiment of the invention as a partly split side view,
Fig. 2 illustrates the embodiment of Fig. 1 seen partly from the direction A-A,
Fig. 3 illustrates another preferred embodiment of the invention as a partly split side view,
Fig. 4 illustrates the embodiment of Fig. 2 seen partly from the direction B-B,

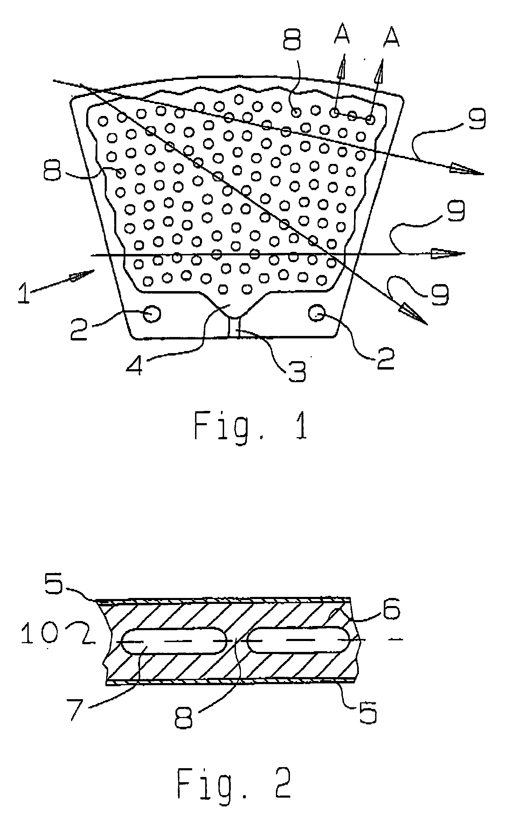

According to Figs. 1 and 2 the filter plate (1) is provided with mounting holes (2) to be attached to a suction dryer (not shown). The filter plate (1) is further provided with an outlet (3) through which the filtrate is removed from the interior (4) of the filter plate (1). The area in the filter plate (1) which is used for the filtration itself contains a membrane (5) with a mean pore size of about (1) micrometer and a substrate (6), whereon the membrane (5) Is positioned. The substrate (6) has in Its interior recess areas (7) and between these recess areas there are positioned supporting elements (8). The supporting elements (8) are made of the same material as the substrate (6) and these supporting elements (8) are shaped as circular buttons in the cross-section (10) parallel to the filtration surface of the filter plate (1).

When using the filter plate (1) of the invention In the filtration process the filtrate flows through the porous membrane (5) to the substrate (6) and further through the pores in the substrate (6) into the interior (4). The filtrate will further flow through the recess areas (7) to the outlet (3).

Fig. 1 is also provided with some stress lines (9) in order illustrate the positions of the supporting elements (8) for preventing straight stress lines because the stress lines (9) go through at least one supporting element (8).

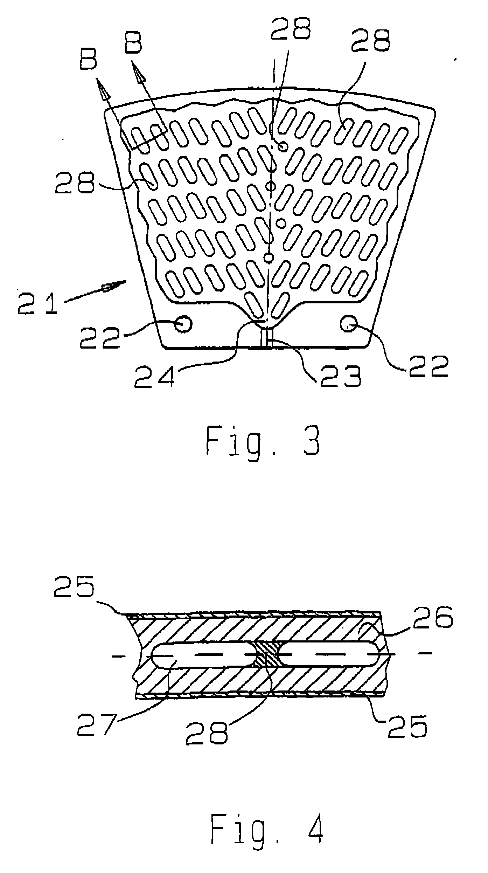

According to Figs. 3 and 4 the filter plate (21) of the invention is provided with mounting holes (22) to be attached to a suction dryer (not shown), The filter plate (21) is also provided with an outlet (23) through which the filtrate is removed from the interior (24) of the filter plate (21). The area In the filter plate (21), which is used for the filtration itself, contains a membrane (25) with a mean pore size of about 1 micrometer and a substrate (26), whereon the membrane (25) is positioned. The substrate (26) has In its interior recess areas (27) and between these recess areas (27) there are positioned supporting elements (28). The supporting elements (28) are made of the different material as the substrate (26). The supporting elements (28) are partly shaped as circular buttons, but most of the supporting elements (28) have different kind of a shape.

When using the filter plate (21) of the invention In the filtration process the filtrate flows through the filter plate (21) in similar manner as described above for the embodiment of Fig. 1.

## Claims

1. Microporous filter plate (1), (21) to be used in a suction drier, the filter plate of which contains a membrane (5), (25) with a mean pore size of about 1 micrometer, a porous substrate (6), (26), whereon the membrane (5), (25) Is positioned, and a recessed area (7), (27) in the Interior (4), (24) of the filter plate (1), (21) with cavities for a filtrate and for a backwash liquid, and also provided with at least one outlet or inlet for the filtrate and for the backwash liquid outlet/inlet as well as with mounting holes (2), (21) or hubs for attaching the filter plate to the suction drier, the recessed area In the interior (4), (24) of the filter plate being provided with supporting elements (8), (28), **characterized In that** the edge of the supporting elements (8), (28) around the recessed areas (7), (27) between the supporting elements has a curvature shape.

2. Filter plate (1), (21) according to the claim 1, **characterized In that** the supporting elements (8), (28) in the recessed area contain 10 to 50 % of the total area of the recessed (7), (27) area.

3. Filter plate according to the claim 1 or 2, **characterized in that** the supporting elements (8), (28) are so positioned that the distance between the supporting elements is maximum 75 millimeters from an edge of a supporting (8), (28) element to an edge of another supporting element.

4. Filter plate according to any of the preceding claims, **characterized in that** the supporting element (8) is a circular button in shape.

5. Filter plate according to any of the preceding claims, **characterized in that** the supporting element (8), (28) is part of the substrate (6), (26).

6. Filter plate according to any of the preceding claims, **characterized in that** the mean pore size in the substrate is between 5 and 90 micrometer.

7. Filter plate to any of the preceding claims, **characterized in that** the porosity range of the substrate is 25 - 80 %.

8. Filter plate according to any of the preceding claims, **characterized in that** the membrane (5), (25) and the substrate (6), (26) is made of the same material.

9. Filter plate according to any of the preceding claims 1 to 6 **characterized in that** the membrane (5), (25) and the substrate (6), (26) is made of different materials.

10. Filter plate according to any of the preceding claims, **characterized in that** at least one ceramic material is used for manufacturing the filter plate (1), (21).

11. Filter plate according to any of the preceding claims 1 to 9 is **characterized in that** at least one sintered metal is used for manufacturing the filter plate (1), (21).

12. Filter plate according to any of the preceding claims 1 to 9, **characterized in that** at least one plastics material Is used for manufacturing the filter plate (1), (21).

13. Filter plate according to any of the preceding claims 1 to 9 **characterized In that** at least one carbon based material is used for manufacturing the filter plate (1), (21).

## Patentansprüche

1. Monoporöse Filterplatte (1), (21) zur Verwendung in einem Saugtrockner, deren Filterplatte eine Membran (5), (25) mit einer mittleren Porengröße von etwa 1 Mikrometer, ein poröses Substrat (6), (26), auf dem die Membran (5), (25) positioniert ist, und eine versenkte Fläche (7), (27) im Inneren (4), (24) der Filterplatte (1), (21) mit Kavitäten für ein Filtrat und für eine Rückspülflüssigkeit enthält, und die ebenso zumindest einen Auslass oder Einlass für das Filtrat und für den Rückspülflüssigkeits-Auslass/Einlass aufweist wie auch Befestigungslöcher (2), (21) oder Naben zum Befestigen der Filterplatte am Saugtrockner, wobei die versenkte Fläche im Inneren (4), (24) der Filterplatte Stützelemente (8), (28) aufweist, **dadurch gekennzeichnet, dass** der Rand der Stützelemente (8), (28) um die versenkten Flächen (7), (27) zwischen den Stützelementen eine gekrümmte Form hat.

2. Filterplatte (1), (21) nach Anspruch 1, **dadurch gekennzeichnet, dass** die Stützelemente (8), (28) in der versenkten Fläche 10 bis 50% der Gesamtfläche der versenkten Fläche (7), (27) einnehmen.

3. Filterplatte nach Anspruch 1 oder 2, **dadurch gekennzeichnet, dass** die Stützelemente (8), (28) so positioniert sind, dass der Abstand zwischen den Stützelementen maximal 75 Millimeter von einem Rand eines Stützelements (8), (28) zu einem Rand eines anderen Stützelements beträgt.

4. Filterplatte nach einem der vorangehenden Ansprüche, **dadurch gekennzeichnet, dass** das Stützelement (8) die Form eines kreisförmigen Knopfes aufweist.

5. Filterplatte nach einem der vorangehenden Ansprüche, **dadurch gekennzeichnet, dass** das Stützelement (8), (28) Teil des Substrates (6), (26) ist.

6. Filterplatte nach einem der vorangehenden Ansprüche, **dadurch gekennzeichnet, dass** die mittlere Porengröße des Substrates zwischen 5 und 90 Mikrometer beträgt.

7. Filterplatte nach einem der vorangehenden Ansprüche, **dadurch gekennzeichnet, dass** die Porosität des Substrates 25 bis 80% beträgt.

8. Filterplatte nach einem der vorangehenden Ansprüche, **dadurch gekennzeichnet, dass** die Membran (5), (25) und das Substrat (6), (26) aus demselben Material bestehen.

9. Filterplatte nach einem der Ansprüche 1 bis 6, **dadurch gekennzeichnet, dass** die Membran (5), (25) und das Substrat (6), (26) aus unterschiedlichen Materialien bestehen.

10. Filterplatte nach einem der vorangehenden Ansprüche, **dadurch gekennzeichnet, dass** zumindest ein Keramikmaterial zur Herstellung der Filterplatte (1), (21) verwendet wird.

11. Filterplatte nach einem der Ansprüche 1 bis 9, **dadurch gekennzeichnet, dass** zumindest ein gesintertes Metall zur Herstellung der Filterplatte (1), (21) verwendet wird.

12. Filterplatte nach einem der Ansprüche 1 bis 9, **dadurch gekennzeichnet, dass** zumindest ein Kunststoffmaterial zur Herstellung der Filterplatte (1), (21) verwendet wird.

13. Filterplatte nach einem der Ansprüche 1 bis 9, **dadurch gekennzeichnet, dass** zumindest ein auf Kohlenstoff basierendes Material zur Herstellung der Filterplatte (1), (21) verwendet wird.

## Revendications

1. Plaque filtrante microporeuse (1), (21) destinée à être utilisée dans un appareil de séchage par aspiration, dont la plaque filtrante contient une membrane (5), (25) avec une taille de pore moyenne d'environ 1 micromètre, un substrat poreux (6), (26) sur lequel la membrane (5), (25) est positionnée, et une zone évidée (7), (27) dans l'intérieur (4), (24) de la plaque filtrante (1), (21) avec des cavités pour un filtrat et pour un liquide de lavage de retour, et également prévue avec au moins une sortie ou entrée pour le filtrat et pour la sortie/entrée du liquide de lavage de retour ainsi qu'avec des trous de montage (2), (21) ou raccords pour fixer la plaque filtrantes sur l'appareil de séchage par aspiration, la zone évidée dans l'intérieur (4), (24) de la plaque filtrante étant prévue avec des éléments de support (8), (28), **caractérisée en ce que** le bord des éléments de support (8), (28) autour des zones évidées (7), (27) entre les éléments de support a une forme incurvée.

2. Plaque filtrante (1), (21) selon la revendication 1, **caractérisée en ce que** les éléments de support (8), (28) dans la zone évidée représentent de 10 à 50% de la surface totale de la zone évidée (7), (27).

3. Plaque filtrante selon la revendication 1 ou 2, **caractérisée en ce que** les éléments de support (8), (28) sont positionnés de sorte que la distance entre les éléments de support est de 75 millimètres maximum d'un bord d'un élément de support (8), (28) à un bord d'un autre élément de support.

4. Plaque filtrante selon l'une quelconque des revendications précédentes, **caractérisée en ce que** l'élément de support (8) a une forme de bouton circulaire.

5. Plaque filtrante selon l'une quelconque des revendications précédentes, **caractérisée en ce que** l'élément de support (8), (28) fait partie du substrat (6), (26).

6. Plaque filtrante selon l'une quelconque des revendications précédentes, **caractérisée en ce que** la taille de pore moyenne dans le substrat est comprise entre 5 et 90 micromètres.

7. Plaque filtrante selon l'une quelconque des revendications précédentes, **caractérisée en ce que** la plage de porosité du substrat est de l'ordre de 25 - 80%.

8. Plaque filtrante selon l'une quelconque des revendications précédentes, **caractérisée en ce que** la membrane (5), (25) et le substrat (6), (26) sont réalisés avec le même matériau.

9. Plaque filtrante selon l'une quelconque des revendications 1 à 6, **caractérisée en ce que** la membrane (5), (25) et le substrat (6), (26) sont réalisés avec des matériaux différents.

10. Plaque filtrante selon l'une quelconque des revendications précédentes, **caractérisée en ce qu'**au moins un matériau en céramique est utilisé pour fabriquer la plaque filtrante (1), (21).

11. Plaque filtrante selon l'une quelconque des revendications 1 à 9, **caractérisée en ce qu'**au moins un métal fritté est utilisé pour fabriquer la plaque filtrante (1), (21).

12. Plaque filtrante selon l'une quelconque des revendications 1 à 9, **caractérisée en ce qu'**au moins une matière plastique est utilisée pour fabriquer la plaque filtrante (1), (21).

13. Plaque filtrante selon l'une quelconque des revendications 1 à 9, **caractérisée en ce qu'**au moins un matériau à base de carbone est utilisé pour fabriquer la plaque filtrante (1), (21).
